# EUROPEAN PATENT APPLICATION

(11) **EP 1 803 695 A1**
(43) Date of publication of application: **04.07.2007**
(21) Application number: 06021135.6
(22) Date of filing: 09.10.2006
(51) Int. Cl.: C04B 35/638

(54) **Degreasing jig, method for degreasing ceramic molded body, and method for manufacturing honeycomb structured body**

(30) Priority: 27.12.2005 WO PCT/IB2005/023960
(71) Applicant: IBIDEN CO., LTD., Ogaki-shi Gifu 503-8604 (JP)
(72) Inventor: Saijo, Takamitsu, 2326 Neumenn Janos u.1 (HU); Naruse, Kazuya, 45320 Courtenay (FR); Kasai, Kenichiro, Ibigawa-cho Ibi-gun Gifu 501-0695 (JP)
(74) Representative: HOFFMANN EITLE

(57) **Abstract**

An object of the present invention is to provide a degreasing jig capable of preventing the adherence of tar-like substances and the like onto a molded body during degreasirig, and the degreasing jig according to the present invention is a degreasing jig for degreasing of a ceramic molded body containing a ceramic powder, a binder, and a dispersion medium, comprising a bottom plate for placing the ceramic molded body thereon, and an air-permeable cover member provided in a manner to cover the ceramic molded body.

## Description

### TECHNICAL FIELD

The present invention relates to a degreasing jig, a method for degreasing a ceramic molded body, and a method for manufacturing a honeycomb structured body.

### BACKGROUND ART

Harm to the environment and the human body caused by particulates such as soot contained in exhaust gas discharged from the internal combustion engines of buses, trucks and other vehicles, construction equipment and the like has recently become a problem. To remedy this, there are currently proposed numerous kinds of honeycomb filters using a honeycomb structured body of porous ceramic as a filter for capturing particulates contained in exhaust gas, thereby purifying the exhaust gas.

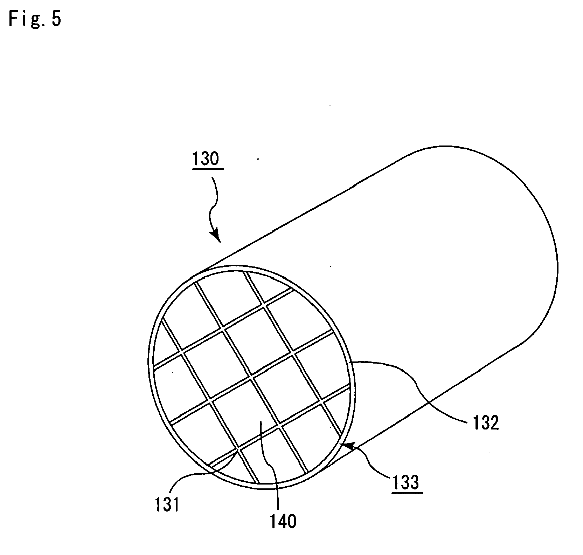

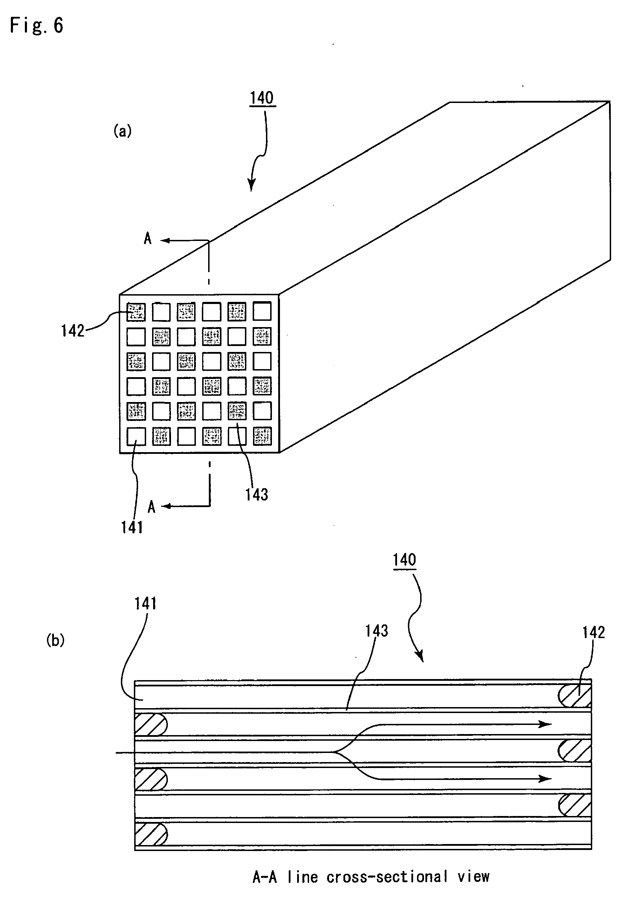

Fig. 5 is a perspective view schematically showing an example of such a honeycomb structured body. Fig. 6(a) is a perspective view schematically showing a honeycomb fired body which comprises the above-mentioned honeycomb structured body, while Fig. 6 (b) is a cross- section view of the line A-A therein.

In a honeycomb structured body 130, a plurality of honeycomb fired bodies 140, of the kind shown in Fig. 6, are combined together by interposing a sealing material layer (adhesive layer) 131 forming a ceramic block 133, and a sealing material layer (coat layer) 132 is formed over the outer periphery of the ceramic block 133.
And comprising the honeycomb fired body 140 are, as shown in Fig. 6, a multitude of cells 141 placed in parallel in the longitudinal direction, and cell walls 143 which partition the cells 141 provide filtration functionality individually.

More specifically, as shown in Fig. 6(b), the end portion of either the exhaust gas inlet side or the exhaust gas outlet side of the cells 141 formed in the honeycomb fired body 140 is sealed by a plug material layer 142. Therefore, the exhaust gas which enters one cell 141 will always pass through the cell wall 143 dividing the cells 141, to flow out through another one of the cells 141. When the exhaust gas passes through the cell wall 143, particulates contained within the exhaust gas are captured by the cell wall 143, thereby purifying the exhaust gas.

Conventionally, when manufacturing such a honeycomb structured body 130, first a ceramic powder as raw material and a binder are combined. Then, a dispersion medium and the like are added and all of the above is mixed together to prepare a wet mixture. Using a die, the wet mixture is continuously extrusion molded, and the extruded molded body is then cut to a prescribed length to produce a rectangular pillar-shaped honeycomb molded body.

Next, the honeycomb molded body attained above is dried using microwave drying or hot air drying. Afterward, plugs are injected into prescribed cells using the plug material layer in order to achieve a sealed state of either end the cells. After the sealed state has been achieved, degreasing and firing treatment is carried out, thus producing the honeycomb fired body.

Afterward, a sealing material paste is applied onto the sides of the honeycomb fired body, and the honeycomb fired bodies are adhered together using the sealing material paste. Herewith, an aggregate of honeycomb fired bodies in which a multitude of the honeycomb fired bodies are combined together by interposing a seal material layer (adhesive layer) is manufactured. Excision is then carried out on the achieved aggregate of honeycomb fired bodies using a cutting machine or the like to achieve a ceramic block of a prescribed form, such as a cylindrical or cylindroid form or the like. Finally, a sealing material paste is coated over the outer periphery of the ceramic block to form a seal material layer (the coat layer), thereby completing the manufacture of the honeycomb structured body.

With such a honeycomb structured body manufacturing method, during a degreasing process of a honeycomb molded body, liquids and gases of organic components and moisture components are largely generated. Liquids and gasses thus generated come to adhere to a wall face (the upper side wall face in particular) of the degreasing furnace, and in cases in which liquids and gasses thus generated drop as a tar-like substance onto the honeycomb molded body, it brings a negative influence on the properties of the honeycomb structured body.

At that point, a method of placing a honeycomb molded body between two plate-like bodies to thereby conduct degreasing is disclosed in Patent Document 1.
As is disclosed in Patent Document 1, it is possible to prevent the liquids dropping from the wall face of the degreasing furnace from adhering to the honeycomb molded body by the employment of a degreasing method in which places a plate-like body is placed in such a manner so as to cover the upper side of the honeycomb molded body.

Patent Document 1: JP-A 2001-19560

### DISCLOSURE OF THE INVENTION

### PROBLEMS TO BE SOLVED BY THE INVENTION

However, because the upper surface of a degreasing jig disclosed in Patent Document 1 is covered by a plate-like body, it is difficult for gasses generated by the honeycomb molded body during degreasing to escape to outside of the degreasing jig. And in a case of carrying out degreasing treatment in such a situation, variation occurs in the properties of pore diameter, strength, and the like on the honeycomb fired body attained after passing through subsequent processes.
Also, a portion of the gasses and liquids generated during the degreasing treatment of the honeycomb molded body come to adhere to the lower surface of a plate-like body constituting the degreasing jig, which afterward, sometimes come to drop onto the honeycomb molded body in a tar-like substances, which will bring a negative influence on the properties of the honeycomb molded body.

### MEANS FOR SOLVING THE PROBLEMS

The inventors of the present invention have made keen examination in aim of solving the above-mentioned problem, and have devised a degreasing jig and the like that is able to prevent the adherence of tar-like substances and the like on the molded body during degreasing, and have thereby perfected the present invention.
Specifically, the degreasing jig according to the present invention is used in degreasing a ceramic molded body containing a ceramic powder, a binder, and a dispersion medium, and comprises a bottom plate for placing the above-mentioned ceramic molded body thereon, and an air-permeable cover member provided in a manner to cover the above-mentioned ceramic molded body.

In the degreasing jig according to the present invention, it is preferable that the air-permeable cover member has a lattice-shaped body, and that the opening size of the same cover member is in the range of 0.045 to 0.46 mm. It is also preferable that the above-mentioned lattice-shaped cover member is a flat mesh.
It is also preferable that in the above-mentioned degreasing jig, the above-mentioned bottom plate is disposed almost parallel with respect to the air-permeable cover member.

The method for degreasing a ceramic molded body according to the present invention is configured to place the ceramic molded body containing a ceramic powder, a binder, and a dispersion medium, onto the degreasing jig, and afterward, by heating treatment, decomposes and evaporates the above-mentioned binder and the above-mentioned dispersion medium, and uses a degreasing jig comprising a bottom plate for placing the above-mentioned ceramic molded body thereon, and an air-permeable cover member provided in a manner to cover the above-mentioned ceramic molded body as the above-mentioned degreasing jig.

In the above-mentioned method for degreasing a ceramic molded body according to the present invention, it is preferable that the air-permeable cover member has a lattice-shaped body, and that the opening size of the same cover member is in the range of 0.045 to 0.46 mm.
It is also preferable that the above-mentioned lattice-shaped cover member is a flat mesh. It is also preferable that in the above-mentioned degreasing jig, the above-mentioned bottom plate is disposed almost parallel with respect to the air-permeable cover member.

The method for manufacturing a honeycomb structured body according to the present invention is a method for manufacturing a honeycomb structured body comprising a honeycomb fired body, including the steps of: manufacturing a pillar-shaped honeycomb molded body in which a multitude of cells are placed in parallel with one another in the longitudinal direction with a cell wall therebetween, by molding a ceramic raw material; and subsequently carrying out degreasing treatment of the honeycomb molded body using a degreasing jig, manufacturing a honeycomb fired body by firing further the honeycomb molded body that has been subjected to the degreasing treatment, wherein the degreasing treatment is carried out using a degreasing jig comprising a bottom plate for placing a honeycomb molded body thereon, and an air-permeable cover member provided in a manner to cover the honeycomb molded body.
In the present specification, the shape indicated by the word "pillar" refers to any desired shape of a pillar including a round, oval or polygonal pillar and the like.

In the method for manufacturing a honeycomb structured body according to the present invention, it is preferable that the air-permeable cover member has a lattice-shaped body, and that the opening size of the same cover member is in the range of 0.045 to 0.46 mm.
It is also preferable that the above-mentioned lattice-shaped cover member is a flat mesh. It is also preferable that in the above-mentioned degreasing jig, the above-mentioned bottom plate is disposed almost parallel with respect to the air-permeable cover member.

### EFFECTS OF THE INVENTION

In the degreasing jig according to the present invention, the air-permeable cover member is included in a manner to cover the ceramic molded body. Because of this, the gasses and liquids generated from the ceramic molded body during degreasing pass through the above-mentioned cover member. On the other hand, tar-like substances and the like that have dropped from the upper side of the degreasing furnace during degreasing come to be trapped by the cover member.
Therefore, in cases in which degreasing treatment is carried out using the degreasing jig according to the present invention, it is possible to prevent the tar-like substances and the like originating from the organic matters and the like generated from the ceramic molded body from adhering to the ceramic molded body, thus enabling the execution of sufficiently better degreasing treatment.

Also, in the ceramic molded body manufacturing method according to the present invention, degreasing treatment is carried out by placing the ceramic molded body onto the degreasing jig comprising the air-permeable cover member provided in a manner to cover the ceramic molded body. And because of this, the gasses and liquids generated from the ceramic molded body during degreasing pass through the above-mentioned cover member. On the other hand, tar-like substances and the like that have dropped from the top of the degreasing furnace during degreasing come to be trapped by the cover member.
Therefore, in the degreasing jig according to the present invention, it is possible to prevent the tar-like substances and the like originating from the organic matters and the like generated from the ceramic molded body from adhering to the ceramic molded body, thus enabling the execution of sufficiently better degreasing treatment.

And in the method for manufacturing a honeycomb structured body according to the present invention, degreasing treatment is carried out by placing the honeycomb molded body onto the degreasing jig comprising the air-permeable cover member provided in a manner to cover the honeycomb molded body. And because of this, the gasses and liquids generated from the honeycomb molded body during degreasing pass through the above-mentioned cover member. On the other hand, tar-like substances and the like that have dropped from the top of the degreasing furnace during degreasing come to be trapped by the cover member.
Therefore, in the degreasing jig according to the present invention, it is possible to prevent the tar-like substances and the like originating from the organic matters and the like generated from the honeycomb molded body from adhering to the honeycomb molded body, thus enabling the execution of sufficiently better degreasing treatment.

### BEST MODE FOR CARRYING OUT THE INVENTION

First of all, description will be set forth in regard to the degreasing jig according to the present invention and the method for degreasing a ceramic molded body according to the present invention.
The degreasing jig according to the present invention is used in the degreasing of a ceramic molded body containing a ceramic powder, a binder, and a dispersion medium, and comprises a bottom plate for placing the above-mentioned ceramic molded body thereon, and an air-permeable cover member provided in a manner to cover the above-mentioned ceramic molded body.

Also, the method for degreasing a ceramic molded body according to the present invention contains the steps of: placing a ceramic molded body containing a ceramic powder, a binder, and a dispersion medium onto a degreasing jig; and subsequently decomposing and evaporating the binder and the dispersion medium by heating treatment, wherein a degreasing jig comprising a bottom plate for placing the ceramic molded body thereon, and an air-permeable cover member provided in a manner to cover the ceramic molded body is used as the degreasing jig.
Thereby, it is possible to carry out the method for degreasing a ceramic molded body according to the present invention optimally using the degreasing jig according to the present invention.

Next, description will be set forth in regard to the degreasing jig according to the present invention using the drawings as a reference.

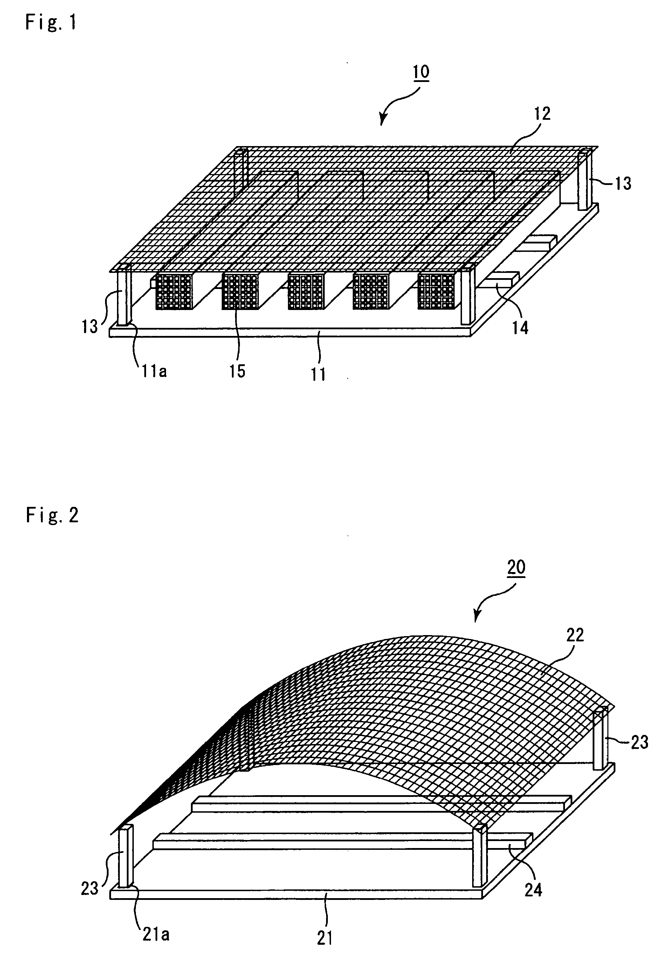

Fig. 1 is a perspective view schematically showing an example of the degreasing jig according to the present invention.
This degreasing jig 10 is comprised of a flat plate shaped bottom plate (molded body placing plate) 11, a flat mesh cover member 12, and a pillar-shaped supporting member 13. The outer edge of the cover member 12 is rectangular shaped, and the same cover member 12 is configured to cover the molded body placing plate 11 at a prescribed distance from the molded body placing plate 11. The supporting member 13 is fixed at the four corners of the cover member 12 and supports the cover member 12.
The supporting member 13 is fitted to through holes 11a formed at the four corners of the molded body placing plate 11 having quadrangular pillar shape.

A belt-like carbon fiber mat 14 having thin shape is fixed to the molded body placing plate 11 in parallel at a plurality of places. And a ceramic molded body 15 to which drying and plugging have been completed is placed onto the molded body placing plate 11 by interposing the carbon fiber mat 14.
When actually placing the ceramic molded body 15, first the ceramic molded body is placed onto the molded body placing plate 11 by interposing the carbon fiber mat 14. Afterward, by fitting the lower portion of the supporting member 13, which is fixed on the cover member 12, into a through hole 11a of the molded body placing plate 11, the cover member 12 is installed therein.

In the degreasing jig 10 constituted in such a configuration, because the cover member 12 is disposed in a manner to cover the ceramic molded body placed therein, upon degreasing the ceramic molded body 15 even if tar-like substances and the like originating from decomposed organics drop from above, these tar-like substances do not come in contact with the ceramic molded body 15. Also, because the surroundings of the ceramic molded body are in an open state, it is possible to carry out sufficiently better degreasing treatment thereto.

Also, in the degreasing jig according to the present invention, the carbon fiber mat may be provided therein according to necessity.
The above-mentioned carbon fiber mat is provided for the purpose of preventing the ceramic molded body from contacting the molded body placing plate. As long as the above-mentioned mat is one highly resistant to degreasing treatment temperatures, it is acceptable to provide a mat of a fiber other than carbon fiber, and it is also acceptable to provide a highly porous member comprised of ceramic and the like in place of the carbon fiber mat.

Also, in Fig. 1, the carbon fiber mat 14 is provided parallel to the direction of the long side of the molded body placing plate 11. The ceramic molded body 15 is disposed in a manner so that the length direction of the ceramic molded body 15 and the carbon fiber mat 14 lie at a right angle to each other. However, it is also acceptable to provide the carbon fiber mat 14 perpendicularly to the direction of the long side of the molded body placing plate 11, and dispose the ceramic molded body 15 in a manner so that the length direction of the ceramic molded body 15 and the carbon fiber mat 14 lie at a right angle to each other.
Also, although in Fig. 1 there are 5 ceramic molded bodies placed on the degreasing jig 10, the number of ceramic molded bodies to be placed is not particularly limited.

It is preferable that the opening size (opening diameter) of the above-mentioned flat mesh is in the range of 0.045 to 0.46 mm (0.04 to 0.50 mm).
This is because, with openings having a size of less than 0.045 mm, the organics generated from the ceramic molded body during degreasing come to adhere to the bottom face (the face of the bottom plate side) of the flat mesh, thereby taking the form of tar-like substances and the like, which then proceed to drop onto the ceramic molded body and adhere thereto. On the other hand, with openings having a size of more than 0.46 mm, in a case in which the tar-like substances and the like originating from decomposed organics have dropped from the upper portion of the degreasing furnace during degreasing treatment, there is a case in which the above-mentioned tar-like substances and the like that have dropped pass right through the flat mesh and onto the ceramic molded body to adhere thereto.

Also, in a case in which the above-mentioned cover member is a mesh shaped body, it is preferable that the kind of the mesh is flat mesh. However, the cover member is not necessarily limited to the flat mesh, and is acceptable as twilled dutch weave, twilled weave of clamp and the like, sintered metallic mesh, metal fiber (sintered metallic nonwoven) and the like. Moreover, the reason that flat mesh is preferable lies in the fact that it is favorable from an economic viewpoint.
Examples of the filamentous material constituting the above-mentioned mesh shaped body include stainless steel, iron, galvanized iron, hard steel, piano wire rods, manganese steel, copper, brass, red copper, phosphor bronze, nickel, nickel-chrome, iron-chrome, monel, aluminum and the like, for instance.

It is preferable that the diameter of filamentous body constituting the above-mentioned mesh shaped body be in the range of 30 to 200µm. This is because at a diameter of less than 30µm strength is weak, and there is a case in which the form suffers distortion and formation of holes during handling. And at a diameter of more than 200µm, the diameter is too fat with respect to the opening which causes great variation in the openings, and in some cases, inconveniences such as dropping of the tar-like substances and the like also occur.
And although the cross section shape of the filamentous body constituting the above-mentioned mesh shaped body is normally circular, it is not limited to this. For instance, the cross-sectional shape of the filamentous body constituting the above-mentioned mesh shaped body may be an arbitrary shape such as triangular, rectangular, polygonal, elliptical, and the like. And regarding each shape, the term 'cross section diameter' refers to the length of the longest portion in the cross section.

The material of the above-mentioned bottom plate is not particularly limited as long as it is a material capable of withstanding degreasing temperatures in the range of 200 to 600 °C. Examples of the material of the above-mentioned bottom plate include non oxide based ceramics such as silicon carbide, silicon nitride, aluminum nitride, boron nitride, and the like for instance.

And in the present description, the phrase 'the cover member is disposed in a manner to cover the ceramic molded body' refers to, when viewing the degreasing jig from a top view, the entirety of the ceramic molded body being located within the region formed by the exterior edge of the cover member.

And the shape of the degreasing jig according to the present invention is not limited to that shape shown in Fig. 1, the shape of the degreasing jig may be for instance a shape as shown in Fig. 2.
Fig. 2 is a perspective view schematically showing another example of the degreasing jig according to the present invention.

The degreasing jig 20 shown in Fig. 2 includes a flat plate shaped bottom plate (molded body placing plate) 21, a flat mesh cover member 22, and a pillar-shaped supporting member 23. The cover member 22 has a shape like a plate with a convexly curved top, and the same cover member 22 is disposed to cover the molded body placing plate 21 at a prescribed distance from the molded body placing plate 21. The supporting member 23 is fixed at the four corners of the cover member 22, and supports the cover member 22.
The supporting member 23 is fitted to through holes 21a formed at the four corners of the molded body placing plate 21 having quadrangular pillar shape.

A belt-like carbon fiber mat 24 having thin shape is fixed to the molded body placing plate 11 in parallel at a plurality of places. And a ceramic molded body (not shown) is placed onto the molded body placing plate 21 by interposing the carbon fiber mat 24.

In this manner, the shape of the cover member constituting the degreasing jig according to the present invention is not particularly limited and is acceptable as long as it is provided to cover the ceramic molded body.
However, it is preferable that the above-mentioned cover member is disposed almost parallel with respect to the bottom plate (molded body placing plate).
The reason for this is that by being almost parallel, it is possible to keep the height of the degreasing jig to the lowest possible height required, and by doing so it is possible to keep the height of the degreasing furnace low and as a result more easily maintain an even temperature inside of the furnace.
Moreover, the degreasing jig having the plate-like cover member of convexly curved shape formed thereon can be optimally used when conducting degreasing of a cylindrical-shaped ceramic molded body for instance.

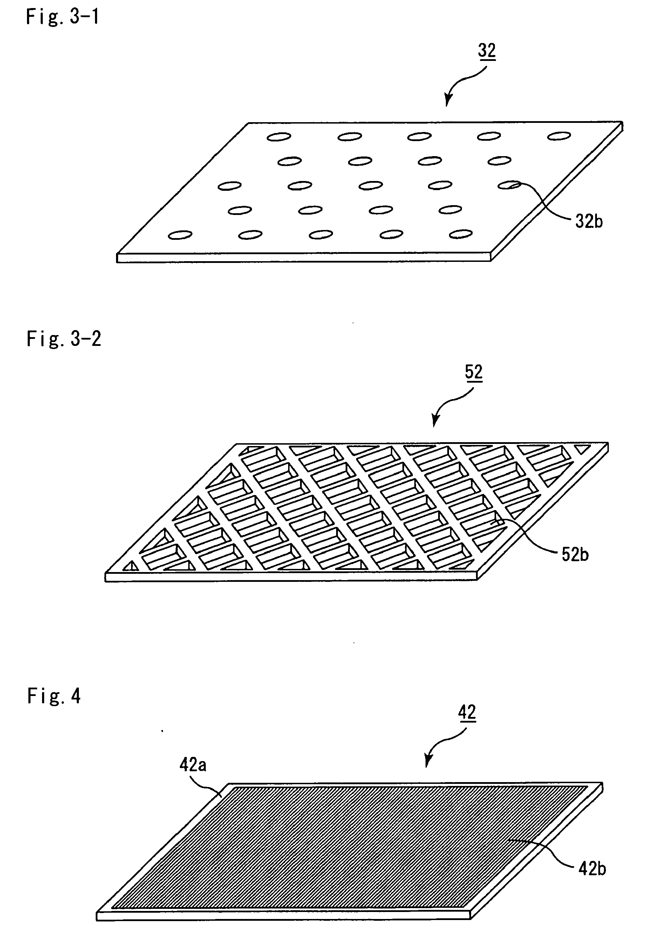

And as set forth herein above, the above-mentioned cover member can have any shape as long as the same cover member has air permeability and can cover the ceramic molded body placed therein. For instance, the above-mentioned cover member may have shapes as shown in Fig. 3-1, Fig. 3-2, and Fig. 4.
Fig. 3-1, Fig. 3-2, and Fig. 4 are each perspective views schematically showing other examples of a cover member constituting the degreasing jig according to the present invention.

A cover member 32 shown in Fig. 3-1 is a plate-like body having a plurality of vent holes 32b that have a circular shape when viewed from above.
A degreasing jig including such cover member 32 can also enjoy the effect according to the present invention set forth herein above.

A cover member 52 shown in Fig. 3-2 is a plate-like body having a plurality of vent holes 52b that have a rhombus shape when viewed from above. Moreover, the cover member 52 is a lattice-shaped body.
A degreasing jig including such cover member 52 can also enjoy the effect according to the present invention set forth herein above.

In the cover members 32 and 52, although the diameter of the opening of the vent holes 32b and 52b is not particularly limited, it is preferably in the range of 0.045 to 0.46 mm.
This is because, with openings having a diameter of less than 0.045 mm, the organics generated from the ceramic molded body during degreasing come to adhere to the bottom face (the face of the bottom plate side) of the cover member, thereby causing the tar-like substances and the like, which then proceed to drop onto the ceramic molded body and adhere thereto. On the other hand, with openings having a diameter of more than 0.46 mm, in a case in which the tar-like substances dropped from the upper portion of the degreasing furnace during degreasing pass through the cover member and onto the ceramic molded body to adhere thereto.
Moreover, the phrase "the above-mentioned opening diameter" refers to the length of the longest portion therein when viewed from above.

The shape of the above-mentioned vent holes when viewed from above is not limited to the circular shape or rhombus shape shown in Fig. 3-1 and Fig. 3-2. It is possible for the above-mentioned vent holes to have an arbitrary shape such as a triangular shape, a rectangular shape, a polygonal shape, an elliptical shape, and the like for instance, when viewed from above. Moreover, the phrase "the above-mentioned opening diameter" refers to the length of the longest portion therein when viewed from above.
The material of the above-mentioned cover member is not particularly limited, and examples of the material of the above-mentioned cover member include metals such as stainless steel, nickel, nickel-cobalt alloys and the like, as well as non oxide based ceramics and the like as in the manner of the above-mentioned bottom plate.

The thickness of the above-mentioned cover member is also not particularly limited. The lower limit of thickness of the above-mentioned cover member is preferably 15µm, and the upper limit of thickness is preferably 60µm.
If the above-mentioned cover member has a thickness of less than 15µm, there are cases in which the strength thereof will not be sufficient, and alternately, if the above-mentioned cover member has a thickness of more than 60µm, there is a case in which the permeability of the gas through the cover member drops.

In a case in which the above-mentioned cover member is comprised of metal of the sort set forth herein above, it is possible to use methods such as laser processing, etching, punching, additive plating and the like as a method for manufacturing a cover member of a shape in the manner shown in Fig. 3-1 and Fig. 3-2. And in a case in which the above-mentioned is comprised of the ceramic set forth herein above, it is possible to use a method for forming through hole using blast processing or drill processing on a ceramic plate, and a method for carrying out punching processing to a ceramic green sheet and thereafter carrying out firing, and the like.

Also, a cover member 42 shown in Fig. 4 is constituted by a frame material 42a having exterior dimensions almost the same dimensions as the molded body placing plate, and a plurality of filamentous bodies 42b disposed in parallel inside of the frame material 42a at prescribed space intervals.
A degreasing jig including the cover member 42 in this manner can also enjoy the effect according to the present invention set forth herein above.

Although not particularly limited, it is preferable, in the cover member 42, that the space intervals of the filamentous bodies 42b are in the range of 0.045 to 0.46 mm.
This is because, with the above-mentioned space intervals having a diameter of less than 0.045 mm, the organics generated from the ceramic molded body during degreasing come to adhere to the bottom face (the face of the bottom plate side) of the cover member, thereby taking the tar-like substances and the like, which then proceed to drop onto the ceramic molded body and adhere thereto. On the other hand, with the above-mentioned space intervals having a diameter of more than 0.46 mm, in a case in which the tar-like substances and the like originating from decomposed organics have dropped from the upper portion of the degreasing furnace during degreasing treatment, there is a case in which the above-mentioned tar-like substances and the like pass through the flat mesh and drop onto the ceramic molded body to adhere thereto.

Also, the preferable cross section diameter of the filamentous body 42b is the same as the cross section diameter of the filamentous body constituting the mesh shaped body set forth herein above, and the definition thereof is also the same as the filamentous body constituting the above-mentioned mesh shaped body.
And furthermore, the concrete cross section shape of the filamentous body 42b is also the same as the filamentous body constituting the above-mentioned mesh body.

Also, the cover member constituting the degreasing jig according to the present invention is not limited, and any thing may acceptable as long as it is provided in a manner to cover the ceramic molded body. However, it is preferable that the cover member is a lattice-shaped body as shown in Fig. 1, Fig. 2, and Fig. 3-2.
The reason for this is that besides assuredly allowing permeation of the gas generated from the ceramic molded body during degreasing, it is possible to assuredly prevent tar-like substances and the like from adhering to the ceramic molded body, and also, the lattice-shaped form excels in strength and ease of handling.
And it is preferable for the openings of the above-mentioned lattice-shaped body to be in the range of 0.045 to 0.46 mm as set forth herein above.

Next, description will be set forth in regard to the method for degreasing a ceramic molded body according to the present invention, using the degreasing jig according to the present invention.
First, description will be set forth in regard to the method for manufacturing the ceramic molded body which is subjected to degreasing.
In the method for degreasing according to the present invention, the ceramic molded body that is subjected to degreasing is one containing a ceramic powder, a binder, and a dispersion medium.

At this point, description will be set forth in regard to the method for manufacturing a ceramic molded body taking a case of using silicon carbide powder as the above-mentioned ceramic powder as an example. And description will be set forth in regard to the above-mentioned ceramic molded body taking a ceramic molded body used in the manufacture of a honeycomb structured body as an example.
It is a matter of course that the main component of the raw material constituting the above-mentioned ceramic molded body is not limited to silicon carbide. Other examples of the main component of the raw material constituting the above-mentioned ceramic molded body include nitride ceramics such as aluminum nitride, silicon nitride, boron nitride, titanium nitride and the like, carbide ceramics such as zirconium carbide, titanium carbide, tantalum carbide, tungsten carbide and the like, and oxide ceramics such as alumina, zirconia, cordierite, mullite, aluminum titanate and the like, for instance.
Out of the above, nonoxide ceramics is preferable, with silicon carbide being particularly preferable. This is because silicon carbide excels in heat resistance properties, mechanical strength, thermal conductivity, and the like.
Also, silicon containing ceramics of metallic silicon infused with the ceramic set forth herein above, and ceramics bonded with silicon or silicate compounds, and the like, are acceptable as the above-mentioned ceramic powder. For example, a ceramic of silicon carbide infused with metallic silicon is suitable for use therein.

(1) First, silicon carbide powder and organic binder (organic powder) are dry mixed to prepare a powder mixture.
Although the particle diameter of the above-mentioned silicon carbide powder is not particularly limited, one that will not undergo shrinkage during the subsequent firing process is preferable. For example, a powder combination of 100 parts by weight of a powder having a mean particle diameter in the range of 0.3 to 50µm, and 5 to 65 parts by weight of a powder having a mean particle diameter in the range of 0.1 to 1.0µm is preferable for use therein.
And in order to conduct adjustment of the pore diameter and the like of the honeycomb fired body after firing, it is necessary to adjust the firing temperature. However, by adjusting the particle diameter of the ceramic powder, it is also possible to thereby conduct adjustment of the pore diameter.

The above-mentioned organic binder is not particularly limited. Examples of the above-mentioned binder include methyl cellulose, carboxymethyl cellulose, hydroxymethyl cellulose, polyethylene glycol and the like for instance. Out of the above, methyl cellulose is preferable.
It is preferable that the blending amount of the above-mentioned binder be normally in the range of 1 to 10 parts by weight binder with respect to 100 parts by weight of ceramic powder.

(2) Next, a liquid plasticizer and a lubricant and water are mixed together to prepare a liquid mixture, then, by using the wet mixing apparatus to mix the above-mentioned liquid mixture with the powder mixture prepared in the process (1), a wet mixture is prepared for use in the manufacture of the molded body.

The above-mentioned plasticizer is not particularly limited. For instance, an example of the plasticizer includes glycerin and the like.
Also, the above-mentioned lubricant is also not particularly limited. For instance, examples of the above-mentioned lubricant include polyoxyalkylene series compounds such as polyoxyethylene alkyl ether, polyoxypropylene alkyl ether, and the like.
Concrete examples of the lubricant include, for instance, polyoxyethylene monobutyl ether, polyoxypropylene monobutyl ether, and the like.
Moreover, in some cases, it may be acceptable for the above-mentioned liquid mixture not to contain plasticizer or lubricant.

And when preparing the above-mentioned wet mixture, it is acceptable to use a dispersion medium. Examples of the above-mentioned dispersion medium include water, organic solvents such as benzene, and the like, or alcohols such as methanol, and the like.
Moreover, it is acceptable to add a molding auxiliary to the above-mentioned wet mixture. The above-mentioned molding auxiliary is not limited in particular. For instance, examples of the above-mentioned molding auxiliary include ethylene glycol, dextrin, fatty acid, fatty acid soap, poly alcohol, and the like.

Moreover, according to need it is acceptable to add a pore-forming agent such as balloon (which are micro-sized hollow spherical bodies composed of oxide ceramic), spherical acrylic particle, graphite, and the like to the above-mentioned wet mixture.
The above-mentioned balloon is not particularly limited. For instance, examples of the above-mentioned balloon include alumina balloon, glass micro balloon, shirasu balloon, fly ash balloon (FA balloon), mullite balloon, and the like. Out of these, alumina balloon is preferable for use.

The wet mixture using the silicon carbide powder prepared here is preferably at a temperature of 28°C or less. This is because the organic binder may gel at an excessively high temperature.
Also it is preferable that the proportion of the organic component within the above-mentioned wet mixture is of 10% by weight or less, and it is preferable that the moisture content be in the range of 8.0 to 20% by weight.

(3) After being prepared, the wet mixture thus produced is transported to the extraction molding machine with a transporting machine, where it undergoes extraction molding to become the honeycomb molded body of a prescribed shape.
In the method for degreasing according to the present invention, degreasing is carried out on a ceramic molded body manufactured by this sort of method. And in the degreasing method according to the present invention, after manufacturing the above-mentioned ceramic molded body by extraction molding but before carrying out degreasing, it is acceptable to carry out a drying treatment to the above-mentioned ceramic molded body according to necessity. It is acceptable to conduct the above-mentioned drying treatment by using a microwave drying apparatus, a hot air drying apparatus, a reduced pressure drying apparatus, dielectric drying apparatus, a freeze drying apparatus, or the like.

In the above-mentioned degreasing treatment, first, the above-mentioned ceramic molded body is placed onto the molded body placing plate constituting the aforementioned degreasing jig according to the present invention. At this point, in a case in which the above-mentioned molded body placing plate includes a carbon fiber mat, the ceramic molded body is placed onto the molded body placing plate by interposing the carbon fiber mat.
Afterward, by fitting the lower portion of the supporting member, which is fixed onto the cover member, into a through hole of the molded body placing plate, the cover member is installed therein. And, placing the ceramic molded body onto the degreasing jig is completed.

In the method for degreasing according to the present invention, next a heating treatment is carried out on the degreasing jig having the above-mentioned ceramic molded body placed therein, thereby, decomposing and evaporating the above-mentioned binder and the above-mentioned dispersion medium.
More specifically, the above-mentioned degreasing jig is conveyed into the degreasing furnace by way of a conveyer belt, and inside of the degreasing furnace the heating treatment is carried out at a temperature in the range of 200 to 600°C.
Also, it is preferable that the above-mentioned degreasing treatment normally be carried out in an oxidative atmosphere such as an air atmosphere or the like, in order to enable the oxidation decomposition of the organics.
The above-mentioned degreasing furnace is not particularly limited. And although batch type degreasing furnaces are acceptable, it is preferable to carry out degreasing by a continuous furnace provided with a conveyer belt in order to enable continuous degreasing treatment.

In this sort of process, gas and evaporants generated from the ceramic molded body during degreasing treatment pass through the above-mentioned cover member. In contrast, tar-like substances and the like that have dropped from the wall face of the degreasing furnace adhere to the cover member. Therefore, with the method for degreasing according to the present invention, it is possible to prevent the tar-like substances from dropping onto and adhering thereto the ceramic molded body, thereby preventing occurrences of defectively manufactured products caused by such adherence of tar-like substances and the like, and thereby achieve an overall better degreasing process.

Also, although up to this point description has been set forth in regard to the method for degreasing according to the present invention using a honeycomb molded body used in the manufacture of a honeycomb structured body as an example of the ceramic molded body on which degreasing is carried out, the ceramic molded body which is an object of degreasing by the method for degreasing according to the present invention is not limited to a honeycomb molded body, as ceramic molded bodies of various other kinds are also the objects of the degreasing set forth herein.

Next, description will be set forth in regard to the method for manufacturing a honeycomb structured body according to the present invention.
The method for manufacturing a honeycomb structured body according to the present invention is a method for manufacturing a honeycomb structured body comprising a honeycomb fired body, including the steps of: manufacturing a pillar-shaped honeycomb molded body in which a multitude of cells are placed in parallel with one another in the longitudinal direction with a cell wall therebetween, by molding a ceramic raw material; and subsequently carrying out degreasing treatment of the honeycomb molded body using a degreasing jig, manufacturing a honeycomb fired body by firing further the honeycomb molded body on which the degreasing treatment has been carried out, wherein the degreasing treatment is carried out using a degreasing jig comprising a bottom plate for placing a honeycomb molded body thereon, and an air-permeable cover member provided in a manner to cover the honeycomb molded body.
Herein below description will be set forth in regard to the method for manufacturing a honeycomb structured body according to the present invention in the order of the process.

In the method for manufacturing according to the present invention, first, with the starting materials of ceramic powder, binder, dispersion medium, and the like, a honeycomb molded body is manufactured.
More specifically, using a method identical to the method of manufacturing the ceramic molded body described in the method for degreasing ceramic molded body according to the present invention, a honeycomb molded body having a multitude of cells longitudinally placed in parallel with one another with a cell wall therebetween is manufactured.

Next, according to necessity, a prescribed amount of plug material paste which becomes plug material is filled into one of either end of each cell, thereby plugging the cell.
Specifically, in a case of manufacturing a honeycomb structured body intended to function as a ceramic filter, one end of either end of each cell is plugged.
And, according to necessity, it is acceptable to carry out a drying treatment to the above-mentioned honeycomb molded body before the plugging. In such a case, the above-mentioned drying treatment may be carried out using a microwave drying apparatus, a hot air drying apparatus, a reduced pressure drying apparatus, dielectric drying apparatus, a freeze drying apparatus, or the like.

Although above-mentioned plug material paste is not particularly limited, one which the porosity of the plug material manufactured in the subsequent processes is in the range of 30 to 75% is preferable, and it is for instance, possible to use a matter identical to the above-mentioned wet mixture as the plug material paste.

Next, degreasing treatment is carried out on the above-mentioned honeycomb molded body.
At this point, it is acceptable to carry out further degreasing with the method described in the method for degreasing ceramic molded body according to the present invention, using the degreasing jig according to the present invention as the degreasing jig therein.

(4) Next, by firing of (1400 to 2300°C for instance) under prescribed conditions, it is possible to manufacture a honeycomb fired body (refer to Fig. 6) having a multitude of cells placed in parallel with one another in the longitudinal direction with a cell wall therebetween, wherein either side of the above-mentioned cells is plugged.
In regard to the conditions for firing the above-mentioned honeycomb molded body, it is possible to apply conventionally conditions used when traditionally manufacturing a filter comprised of porous ceramic.

And after having carried out the degreasing, it is acceptable to carry out firing treatment of a honeycomb molded body with degreasing treatment finished by moving it into a box shaped firing jig with an lid opened during the firing treatment. However, a honeycomb molded body that degreasing treatment has finished is brittle and easy to break, and therefore it is not preferable to grasp the same honeycomb molded body and move it in this state.
At this point, it is preferable to conduct firing with a firing jig stacked therein, and conveying the firing jig into the firing furnace. The above-mentioned firing jib is preferably constituted by removing the cover member and the supporting member from the degreasing jig while the honeycomb molded body with degreasing treatment carried out is still placed thereon, and placing a frame shaped side wall member (forming the side wall) on top of the molded body placing plate.

Next, the sealing material paste which will serve as the sealing material layer (the adhesive layer) is applied onto the side face of the honeycomb fired body at a uniform thickness to form the sealing material paste layer. On this sealing material paste layer, the process of successively piling up other honeycomb fired bodies is carried out repeatedly, thereby manufacturing an aggregate of honeycomb fired body of a prescribed size.

An example of the above-mentioned sealing material paste includes a material comprised of an inorganic binder, an organic binder and an inorganic fiber and/or an inorganic particle for instance.
Examples of the above-mentioned inorganic binder include silica sol, alumina sol or the like, for instance. It is also acceptable to use the above alone or in combination. Out of the above-mentioned inorganic binders, silica sol is preferable for use.

Examples of the above-mentioned organic binder include polyvinyl alcohol, methyl cellulose, ethyl cellulose, carboxymethyl cellulose and the like, for instance. It is also acceptable to use the above alone or in combination. Out of the above-mentioned organic binders, carboxymethyl cellulose is preferable for use.

Examples of the above-mentioned inorganic fiber include a ceramic fiber or the like such as silica-alumina, mullite, alumina, and silica for instance. It is also acceptable to use the above alone or in combination. Out of the above-mentioned inorganic fibers, alumina fiber is preferable for use.

Examples of the above-mentioned inorganic particle include carbide, nitride and or the like, for instance. More concrete examples include inorganic powders comprised of silicon carbide, silicon nitride, or boron nitride. It is also acceptable to use the above alone or in combination. Out of the above-mentioned inorganic particle, silicon carbide, excellent in thermal conductivity properties, is preferable for use.

Moreover, according to need it is acceptable to add a pore-forming agent such as balloon (which are micro-sized hollow spherical bodies composed of oxide ceramic), spherical acrylic particle, graphite, and the like to the above-mentioned wet mixture.
The above-mentioned balloon is not particularly limited. For instance, examples of the above-mentioned balloon include alumina balloon, glass micro balloon, shirasu balloon, fly ash balloon (FA balloon), mullite balloon, and the like. Out of these, alumina balloon is preferable for use.

Next, this aggregate of honeycomb fired bodies is heated to dry and solidify the sealing material paste layer, to form the sealing material layer (adhesive layer).
Next, using an apparatus such as a diamond cutter or the like, a cutting process is carried out the aggregate of the plurality of honeycomb fired bodies adhered together by interposing the sealing material layer (adhesive layer), thereby manufacturing a cylindrical shaped ceramic block.

Then using the above-mentioned sealing material paste a sealing layer (coat layer) is formed onto the outer periphery of the honeycomb block. By conducting such a process, it is possible to manufacture a honeycomb structured body (Refer to Fig. 5) having the coat layer formed on the outer periphery of the cylindrical ceramic block having a plurality of honeycomb fired bodies adhered together by interposing the sealing material layer (adhesive layer).

After this, it is also acceptable in the method for manufacturing honeycomb structured body according to the present invention to support a catalyst on the honeycomb structured body according to necessity.
The supporting of the above-mentioned catalyst can be conducted on the honeycomb fired body before the manufacture of the aggregate.
In a case of supporting the catalyst, it is preferable to form an alumina coat of a high specific surface area onto the surface of the honeycomb structured body, and then administer a co-catalyst or a catalyst such as platinum or the like onto the surface of this alumina.

Examples of methods for forming the alumina coat onto the surface of the above-mentioned honeycomb structured body include, for instance, methods such as a method of impregnating the honeycomb structured body with a solution of a metallic compound containing an aluminum such as Al(NO₃), a method of impregnating the honeycomb structured body with a solution containing an aluminum powder and then heating, and the like.
Examples of methods for administering the co-catalyst to the above-mentioned alumina coat include methods such as impregnating the honeycomb structured body with a solution of metallic compound containing rare earth elements or the like such as Ce(NO₃)₃, and then heating and the like, for instance.
Examples of methods for administering the catalyst to the above-mentioned alumina coat include methods such as impregnating the honeycomb structured body with a dinitrodiammin platinum nitric acid solution ([Pt (NH₃)₂(NO₂)₂] HNO₃, platinum concentration 4.53% by weight) and the like, and then heating and the like, for instance.
It is also acceptable to administer the catalyst by a method of administering a catalyst to alumina particle in advance, and impregnating the honeycomb structured body with a solution containing the alumina powder that has been given the catalyst, and then heating, and the like.

Also, although the honeycomb structured body manufactured by the method for manufacturing the honeycomb structured body described up to this point is a honeycomb structured body having a constitution of a plurality of honeycomb fired bodies combined together by interposing a seal material layer (adhesive layer)(hereinafter, also termed aggregated honeycomb structured body), the honeycomb structured body manufactured by the manufacturing method according to the present invention can also be a honeycomb structured body of a cylindrical ceramic block constituted by a single honeycomb fired body (hereinafter, also termed 'integral honeycomb structured body').

In a case of manufacturing the integral honeycomb structured body of this sort, first of all, the size of the honeycomb molded body molded by extrusion molding is larger in comparison to the size of the honeycomb molded body in a case of manufacturing the aggregated honeycomb structured body. Other than this point, the honeycomb molded body is manufactured using the same methods used in the manufacture of the aggregated honeycomb structured body.
At this point, because the method for mixing raw material powder and the like are identical to those used in the method for manufacturing of the above-mentioned aggregated honeycomb structured body, description in regard to the same will be omitted here.

Next, in the same manner as in the manufacture of the aggregated honeycomb structured body, according to necessity, a drying treatment using a microwave drying apparatus, a hot air drying apparatus, a dielectric drying apparatus, a reduced pressure drying apparatus, a vacuum drying apparatus, a freeze drying apparatus, or the like, is carried out on the above-mentioned honeycomb molded body, and then according to necessity, a prescribed amount of the plug material paste is injected into one of either end of each cell, thereby plugging the cells.

Afterward, in the same manner as in the manufacture of the aggregated honeycomb structured body, degreasing treatment is carried out using the degreasing jig according to the present invention and the method for degreasing a ceramic molded body according to the present invention, and afterward the honeycomb molded body on which degreasing treatment has been carried out is fired to manufacture a ceramic block, and according to necessity, the sealing layer (coat layer) is formed thereon, to manufacture the integral honeycomb structured body. It is also possible to support a catalyst using the methods set forth herein above, in the above-mentioned integral honeycomb structured body.

Moreover, in a case of manufacturing the honeycomb structured body by a method for manufacturing of the sort set forth herein above, in a case of manufacturing the aggregated honeycomb structured body it is preferable that the main component of the constituent material is silicon carbide, or a combination of silicon carbide and metallic silicon. And in a case of manufacturing the integral honeycomb structured body however, it is preferable to use cordierite or aluminum titanate.

The description in the above mainly discuss the method for manufacturing a honeycomb structured body of the present invention, by taking a honeycomb structured body which can be suitably used as a ceramic filter as an example. However, in the method for manufacturing a honeycomb structured body of the present invention, the honeycomb structured body may be manufactured without being filled with a plug material paste as mentioned above, and the honeycomb structured body in which the end portion of the cells is not sealed with the plug can be suitably used as a catalyst supporting carrier.

### EXAMPLES

The examples will now be set forth herein below and the present invention will come to be described in further detail, however, the present invention will be intended to be limited to solely these examples.

### (Example 1)

(1) 250kg of α type silicon carbide powder having a mean particle diameter of 10µm, 100kg of α type silicon carbide powder having a mean particle diameter of 0.5µm, and 20kg of organic binder (methyl cellulose) were mixed together to prepare a powder mixture.
Next, separately, 12 kg of a lubricant (UNILUB manufactured by the NOF Corp.), 5kg of a plasticizer (glycerin) and 65kg of water was mixed together to prepare a liquid mixture, which was further mixed with the above-mentioned powder mixture using a wet mixing apparatus to prepare a wet mixture.
Next, extraction molding and cutting of this wet mixture was carried out to manufacture a honeycomb molded body.

(2) Next, using a microwave drying apparatus, the above-mentioned honeycomb molded body was dried, and the prescribed cells of the above-mentioned honeycomb molded body were filled with a paste of a composition identical to that of the above-mentioned honeycomb molded body. Afterward, drying was carried out again using the drying apparatus.

(3) Next, five honeycomb molded bodies manufactured through the above-mentioned processes (1) and (2) were placed onto the degreasing jig 10 shown in Fig. 1. Afterward, the above-mentioned degreasing jig was conveyed by a conveyer belt into a continuous degreasing furnace, followed by carrying out a heat treatment at 300°C under an N₂ atmosphere.
At this point, a degreasing jig including the flat mesh cover member 12 (having the shape shown in Fig. 1) with a 140µm diameter stainless-steel filamentous body braided at openings of a 280µm diameter was used as the degreasing jig 10.

(4) Next, the cover member 12 and the supporting member 13 of the degreasing jig 10 were removed, and in the state of the honeycomb molded body on which degreasing treatment had been carried out remaining still placed therein, a side wall member intended to serve as a side wall was placed onto the molded body placing plate 11 to assemble a firing jig having the degreased honeycomb molded body placed therein.
Then, this firing jig was sent into a firing furnace, and firing was carried out at atmospheric pressure under an argon atmosphere at 2200°C for three hours. Herewith, a honeycomb fired body comprised of a silicon carbide sintered body was manufactured having the shape shown in Fig. 3 and having a size of 34 mm X 34 mm X 300 mm, the number of cells of 45 cells/cm², and a cell wall thickness of 0.25 mm.

### (Examples 2 to 21)

Other than changing the form of the cover member to the form shown in Fig. 1, the honeycomb fired body was manufactured in a manner identical to that of Example 1.
Moreover, the 'openings' in the cover member having the shape shown in Fig. 4 refer to the space intervals between the filamentous bodies.

### (Reference Examples 1 to 9)

Other than changing the form of the cover member to the form shown in Fig.1, the honeycomb fired body was manufactured in a manner identical to that of Example 1.

### (Comparative Example 1)

Other than having carried out degreasing treatment without disposing the cover member 12 and the supporting member 13 therein, the honeycomb fired body was manufactured in a manner identical to that of Example 1.

### (Comparative Example 2)

Other than using a cover member comprised of a plate-like body not having air permeability as the cover member, the honeycomb fired body was manufactured in a manner identical to that of Example 1.

### (Evaluation of the honeycomb fired body)

### (1) The existence of adhering substances

Inquiry as to whether or not tar-like substances and the like exist on the surface of the honeycomb fired body was carried out regarding the honeycomb molded body according to Examples, Reference Examples, and Comparative Examples, by visual observation.
Moreover, portions to which tar-like substances and the like have adhered will, after firing, change color and therefore be visually observable.
The results are shown in the Tables 1-1 and 1-2 herein below. Moreover, there were 5 samples in the inquiry.

### (2) The existence of peeling

Inquiry as to whether or not peeling occurs on the cell walls constituting the outer periphery was carried out regarding the honeycomb fired body according to Examples, Reference Examples, and Comparative Examples, by using a metallic pole to lightly tap portions having remains of adherence of tar-like substances and the like in the honeycomb fired body according to Reference Examples and Comparative Examples, and randomly selected portions in the honeycomb fired body according to Examples, and then conducting visual observation.
The results are shown in the Tables 1-1 and 1-2 herein below. Moreover, there were 5 samples in the inquiry.

### (3) Mean pore diameter

Calculation of the mean pore diameter was carried out regarding the honeycomb molded body according to Examples, Reference Examples, and Comparative Examples, by cutting out a 1cm wide cube sample containing portions having remains of adherence of tar-like substances and the like in the honeycomb fired body according to Reference Examples and Comparative Examples, and cutting out a randomly selected 1cm wide cube sample in the honeycomb fired body according to Examples, and, using a fine pore distribution measurement apparatus (AUTOPORE III 9405, manufactured by the Shimadzu Corp.) by the mercury porosimeter method in compliance with JIS R 1655, followed by measuring the fine pore distribution in the fine pore diameter range of 0.2 to 500µm, and calculating the mean fine pore diameter at that time (4V/A).
The results are shown in the Tables 1-1 and 1-2 herein below. Moreover, there were 5 samples in the inquiry.

### (4) Strength

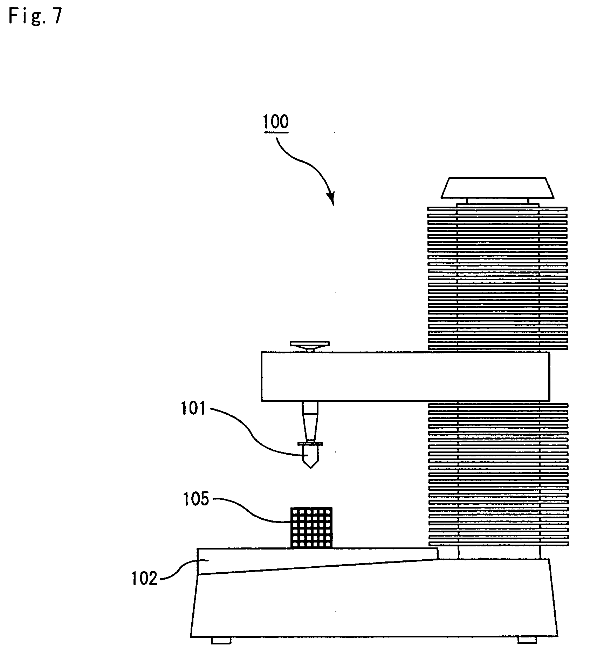

Evaluation in regard to the breaking strength of the honeycomb fired body according to Examples, Reference Examples, and Comparative Examples was carried out using the texture analyzer TX-XT2i (Manufactured by the STABLE MICRO SYSTEMS Corporation) shown in Fig.7 by the method set forth herein below.
More specifically, the compressive load at the time of breaking was measured by placing a honeycomb fired body 105 on top of a measurement table 102 of a texture analyzer 100 shown in Fig. 7, and afterward, bringing down a probe 101 at a speed of 0.5 mm/s .
Moreover, a probe (stainless manufactured) of a 90 Degree cone tip fixed to the end of a 15 mm φ cylindrical body, with a full length of 50 mm was used as the probe 101.
At this point, the probe 101 was brought down onto a portion having remains of adherence of tar-like substances and the like in the honeycomb fired body according to Reference Examples and Comparative Examples, and onto randomly selected portions in the honeycomb fired body according to Examples. Moreover, the location of the tip of the probe 101 to be brought down was a portion from among side face portions set forth herein above which do not intersect with interior cell walls.
And samples different from the peeling evaluation samples of the (2) set forth herein above were used as the samples for this strength evaluation.
The results are shown in the Tables 1-1 and 1-2 herein below. Moreover, there were 5 samples in the inquiry.

**[Table 1-1]**

| | Shape of Cover Member | Diameter of Filamentous Body (µm) | Opening Diameter (µm) | Thickness (µm) | Existence of Adhering substances(*) | Existence of Peeling | Mean Pore Diameter (µm) | Strength (N) |
|---|---|---|---|---|---|---|---|---|
| Example 1 | Fig.1 | 140 | 280 | 50 | ○ | No occurrence | 10.1 | 25.4 |
| Example 2 | Fig.1 | 180 | 460 | 50 | ○ | No occurrence | 10.2 | 25.6 |
| Example 3 | Fig.1 | 140 | 370 | 50 | ○ | No occurrence | 10.2 | 25.5 |
| Example 4 | Fig.1 | 125 | 300 | 50 | ○ | No occurrence | 10.4 | 25.7 |
| Example 5 | Fig.1 | 30 | 224 | 50 | ○ | No occurrence | 10.2 | 25.5 |
| Example 6 | Fig.1 | 50 | 77 | 50 | ○ | No occurrence | 10.0 | 25.2 |
| Example 7 | Fig.1 | 40 | 45 | 50 | ○ | No occurrence | 9.8 | 25.0 |
| Example 8 | Fig.4 | 140 | 280 | 50 | ○ | No occurrence | 10.0 | 25.2 |
| Example 9 | Fig.4 | 180 | 460 | 50 | ○ | No occurrence | 10.1 | 25.5 |
| Example 10 | Fig.4 | 140 | 370 | 50 | ○ | No occurrence | 10.0 | 25.3 |
| Example 11 | Fig.4 | 125 | 300 | 50 | ○ | No occurrence | 10.2 | 25.5 |
| Example 12 | Fig.4 | 30 | 224 | 50 | ○ | No occurrence | 10.1 | 25.2 |
| Example 13 | Fig.4 | 50 | 77 | 50 | ○ | No occurrence | 9.7 | 24.9 |
| Example 14 | Fig.4 | 40 | 45 | 50 | ○ | No occurrence | 9.6 | 24.9 |
| Example 15 | Fig.3-1 | 140 | 280 | 60 | ○ | No occurrence | 10.0 | 25.3 |
| Example 16 | Fig.3-1 | 180 | 460 | 70 | ○ | No occurrence | 10.1 | 25.4 |
| Example 17 | Fig.3-1 | 140 | 370 | 70 | ○ | No occurrence | 10.1 | 25.4 |
| Example 18 | Fig.3-1 | 125 | 300 | 60 | ○ | No occurrence | 10.3 | 25.5 |
| Example 19 | Fig.3-1 | 30 | 224 | 60 | ○ | No occurrence | 10.0 | 25.3 |
| Example 20 | Fig.3-1 | 50 | 77 | 40 | ○ | No occurrence | 9.7 | 24.9 |
| Example 21 | Fig.3-1 | 40 | 45 | 40 | ○ | No occurrence | 9.6 | 24.8 |

| | | | | | | | | |
|---|---|---|---|---|---|---|---|---|
| (*) ○ No adhering substances were observed in all honeycomb fired bodies Δ Adhering substances were observed in a part of the honeycomb fired bodies × Adhering substances were observed in all honeycomb fired bodies | | | | | | | | |

**[Table 1-2]**

| | Shape of Cover Member | Diameter of Filamentous Body (µm) | Opening Diameter (µm) | Thickness (µm) | Existence of Adhering substances (*) | Existence of Peeling | Mean Pore Diameter (µm) | Strength (N) |
|---|---|---|---|---|---|---|---|---|
| Reference example 1 | Fig.1 | 250 | 810 | 50 | Δ | Occurrence | 6.8 | 5.3 |
| Reference example 2 | Fig.1 | 290 | 560 | 50 | Δ | Occurrence | 6.9 | 5.5 |
| Reference example 3 | Fig.1 | 30 | 34 | 50 | Δ | Occurrence | 7.1 | 5.7 |
| Reference example 4 | Fig.4 | 250 | 810 | 50 | Δ | Occurrence | 6.7 | 5.0 |
| Reference example 5 | Fig.4 | 290 | 560 | 50 | Δ | Occurrence | 6.6 | 5.1 |
| Reference example 6 | Fig.4 | 30 | 34 | 50 | Δ | Occurrence | 7.2 | 5.8 |
| Reference example 7 | Fig.3-1 | 250 | 810 | 70 | Δ | Occurrence | 6.7 | 5.2 |
| Reference example 8 | Fig.3-1 | 290 | 560 | 60 | Δ | Occurrence | 6.8 | 5.3 |
| Reference example 9 | Fig.3-1 | 30 | 34 | 40 | Δ | Occurrence | 6.9 | 5.0 |
| Comparative example 1 | - | - | - | - | × | Occurrence | 6.5 | 4.9 |
| Comparative example 2 | - | - | - | 50 | Δ | Occurrence | 7.0 | 5.8 |

| | | | | | | | | |
|---|---|---|---|---|---|---|---|---|
| (*) O No adhering substances were observed in all honeycomb fired bodies Δ Adhering substances were observed in a part of the honeycomb fired bodies × Adhering substances were observed in all honeycomb fired bodies | | | | | | | | |

As is clear from the results shown in Tables 1-1 and 1-2, in a honeycomb fired body manufactured using a degreasing jig including a cover member having openings (the 'openings' of the cover member according to Fig. 1) at a diameter in the range of 0.045 to 0.46 mm, the existence of adhering substances was not observed in all of the honeycomb fired bodies. In respect to this, in a honeycomb fired body manufactured using a degreasing jig including a cover member having openings at a diameter not in the above-mentioned range, the existence of adhering substances was observed in a part of the honeycomb fired bodies.
Moreover, in cases using a degreasing jig not including cover member, and cases using a degreasing jig including the plate-like body cover member, the existence of adhering substances was observed in all of the honeycomb fired bodies.
And in the evaluation of the existence of peeling and the evaluation of the strength, the properties of the honeycomb fired body is inferior in those portions having adhering substances thereon. The reason for this thought lay in the fact that sintering had not progressed sufficiently in those portions. Also, because sintering had not progressed sufficiently in portions having adhering substances, it was not also possible to form pores having the desired diameter therein.
Thus, it became clear that by using the degreasing jig according to the present invention including the cover member, it is possible to reduce the occurrence of adhering substances onto the honeycomb fired body, and in such a case, it is preferable that the diameter of the openings of the cover member be in the range of 0.045 to 0.46 mm.

### BRIEF DESCRIPTIONS OF THE DRAWINGS

Fig.1 is a perspective view schematically showing an example of the degreasing jig according to the present invention.
Fig.2 is a perspective view schematically showing another example of the degreasing jig according to the present invention.
Fig.3-1 is a perspective view schematically showing another example of the cover member constituting the degreasing jig according to the present invention.
Fig.3-2 is a perspective view schematically showing another example of the cover member constituting the degreasing jig according to the present invention.
Fig. 4 is a perspective view schematically showing another example of the cover member constituting the degreasing jig according to the present invention.
Fig.5 is a perspective view schematically showing an example of a honeycomb structured body.
Fig.6(a) is a perspective view schematically showing a honeycomb fired body which comprises a honeycomb structured body, and Fig.6(b) is a A-A line cross-sectional view of Fig.6(a).
Fig.7 is a schematic view of a texture analyzer.

### EXPLANATION OF SYMBOLS

10, 20 degreasing jig
11, 21 bottom plate (molded body placing plate)
12, 22, 32, 42 cover member
13, 23 supporting member

## Claims

1. A degreasing jig for degreasing of a ceramic molded body containing a ceramic powder, a binder, and a dispersion medium, comprising:
a bottom plate for placing said ceramic molded body thereon, and
an air-permeable cover member provided in a manner to cover said ceramic molded body.

2. The degreasing jig according to claim 1,
wherein
said air-permeable cover member has a lattice-shaped body with an opening size of 0.045 to 0.46 mm.

3. The degreasing jig according to claim 1 or 2,
wherein
said cover member having a lattice-shaped body is a flat mesh.

4. The degreasing jig according to any of claims 1 to 3,
wherein
said bottom plate and said air-permeable cover member are disposed almost parallel to each other.

5. A method for degreasing a ceramic molded body, comprising the steps of:
placing a ceramic molded body containing a ceramic powder, a binder, and a dispersion medium onto a degreasing jig; and subsequently
decomposing and evaporating said binder and said dispersion medium by heating treatment,
wherein
a degreasing jig comprising a bottom plate for placing said ceramic molded body thereon, and an air-permeable cover member provided in a manner to cover said ceramic molded body is used as said degreasing jig.

6. The method for degreasing a ceramic molded body according to claim 5,
wherein
said air-permeable cover member has a lattice-shaped body with an opening size of 0.045 to 0.46 mm.

7. The method for degreasing a ceramic molded body according to claim 5 or 6,
wherein
said cover member having a lattice-shaped body is a flat mesh.

8. The method for degreasing a ceramic molded body according to any of claims 5 to 7,
wherein
said bottom plate and said air-permeable cover member are disposed almost parallel to each other.

9. A method for manufacturing a honeycomb structured body comprising a honeycomb fired body, including the steps of:
manufacturing a pillar-shaped honeycomb molded body in which a multitude of cells are placed in parallel with one another in the longitudinal direction with a cell wall therebetween, by molding a ceramic raw material; and subsequently
carrying out degreasing treatment of said honeycomb molded body using a degreasing jig; and
manufacturing a honeycomb fired body by firing further said honeycomb molded body on which said degreasing treatment has been carried out,
wherein
said degreasing treatment is carried out using a degreasing jig comprising a bottom plate for placing a honeycomb molded body thereon, and an air-permeable cover member provided in a manner to cover said honeycomb molded body.

10. The method for manufacturing a honeycomb structured body according to claim 9
wherein
said air-permeable cover member has a lattice-shaped body with an opening size of 0.045 to 0.46 mm.

11. The method for manufacturing a honeycomb structured body according to claim 9 or 10
wherein
said cover member having a lattice-shaped body is a flat mesh.

12. The method for manufacturing a honeycomb structured body according to any one of claims 9 to 11
wherein
said bottom plate and said air-permeable cover member are disposed almost parallel to each other.
